**Europäisches Patentamt**

**European Patent Office**

**Office européen des brevets**

(19)

(11) Veröffentlichungsnummer: **0 032 656**
**B1**

(12)

# EUROPÄISCHE PATENTSCHRIFT

(45) Veröffentlichungstag der Patentschrift:
**05.12.84**

(21) Anmeldenummer: **80890151.6**

(22) Anmeldetag: **18.12.80**

(51) Int. Cl.³: **B 21 D 11/12**, B 21 D 43/00

(54) Anlage zum Herstellen von Bügeln verschiedener Gestalt und Grösse, insbesondere von Betonbewehrungsbügeln.

(30) Priorität: **16.01.80 AT 215/80**

(43) Veröffentlichungstag der Anmeldung:
**29.07.81 Patentblatt 81/30**

(45) Bekanntmachung des Hinweises auf die Patenterteilung:
**05.12.84 Patentblatt 84/49**

(84) Benannte Vertragsstaaten:
**CH DE FR GB IT LI NL**

(56) Entgegenhaltungen:
**AT - B - 298 941**
**AT - B - 314 319**
**DE - A - 1 552 906**
**DE - A - 2 026 639**
**DE - A - 2 119 182**
**DE - A - 2 252 700**
**DE - A - 2 712 843**
**DE - B - 2 143 692**
**FR - A - 1 257 524**
**US - A - 3 431 759**

(73) Patentinhaber: **EVG Entwicklungs- u. Verwertungs-Gesellschaft m.b.H., Vinzenz-Muchitsch-Strasse 36, A-8011 Graz (AT)**

(72) Erfinder: **Ritter, Josef, Dipl.-Ing. Dr., Stenggstrasse 33, A-8043 Graz (AT)**
Erfinder: **Ritter, Klaus, Dipl.-Ing., Peterstalstrasse 157, A-8042 Graz (AT)**
Erfinder: **Ritter, Gerhard, Dipl.-Ing., Unterer Plattenweg 47, A-8043 Graz (AT)**
Erfinder: **Gött, Hans, Dipl.-Ing., Petersbergenstrasse 69, A-8042 Graz (AT)**

(74) Vertreter: **Holzer, Walter, Dipl.-Ing. et al, Patentanwälte Dipl.-Ing. Dr.techn. Schütz Alfred Dipl.-Ing. Dr.techn. Pfeifer Rudolf Dr.phil. Mrazek Engelbert Dipl.-Ing. Holzer Walter Dipl.-Ing. Pfeifer Otto, Fleischmanngasse 9 A-1040 Wien (AT)**

## Beschreibung

Die Erfindung betrifft eine Anlage zum Herstellen von Bügeln unterschiedlicher Gestalt und Grösse, insbesondere von Betonbewehrungsbügeln, mit Hilfe einer Biegemaschine, an welcher die Längen der Schenkel und die Biegewinkel zwischen benachbarten Schenkeln der herzustellenden Bügel sowie die erforderliche Stückzahl derselben unter Mitwirkung einer elektronischen Steuereinrichtung einstellbar sind, wobei die gewünschten Einstellungen der Biegemaschine über einen Datenträger erfolgen, der mit der elektronischen Steuereinrichtung so zusammenwirkt, dass Bügel unterschiedlicher Gestalt und/oder Grösse programmierbar sind.

Eine Bügelbiegemaschine der geschilderten Gattung, bei welcher als Datenträger für die die Grösse und Form der herzustellenden Bügel bestimmenden Parameter sowie für die erforderliche Stückzahl derselben z.B. eine Lochkarte Verwendung finden soll, ist in der DE-A1-2 712 843 der Anmelderin beschrieben.

Trotz ihrer raschen Arbeitsweise sind die bekannten automatisch gesteuerten Bügelbiegemaschinen insoferne noch nicht ganz befriedigend, als die Bügel nach vollendetem Herstellungsvorgang vom Materialstrang, aus dem sie hergestellt werden, abgetrennt und einfach von der Maschine herunterfallen gelassen werden. Das anschliessende Sortieren der Bügel von Hand aus, etwa nach Form und Grösse, gegebenenfalls aber auch nach Besteller, erfordert einen erheblichen Arbeits- und Zeitaufwand und meist auch eine zeitweilige Stillsetzung der Bügelbiegemaschine, um das Arbeitspersonal nicht zu gefährden.

Aufgabe der Erfindung ist es deshalb, eine zum Herstellen von Bügeln bestimmte Anlage der einleitend angegebenen Gattung so auszubilden, dass die Leistungsfähigkeit der Bügelbiegemaschine ohne Gefährdung des Arbeitspersonals voll ausgenutzt werden kann, also auch nicht durch Stillstandszeiten für das Sortieren der fertig gebogenen Bügel beeinträchtigt wird.

Diese Aufgabe wird erfindungsgemäss dadurch gelöst, dass die fertigen Bügel mittels eines Greifers entweder wahlweise zu einer von mehreren örtlich getrennten Abgabestellen, an denen sich getrennte Aufnahmebehälter befinden, oder aber zu einer für alle Bügel gemeinsamen Freigabestellung, unter welche wahlweise einer von mehreren getrennten Aufnahmebehältern bewegbar ist, transportierbar sind, wobei die Auswahl der jeweiligen Abgabestelle bzw. des jeweils unter die gemeinsame Freigabestelle bewegten Behälters durch seitens des Datenträgers der elektronischen Steuereinrichtung aufgegebene Befehle erfolgt.

Es sei erwähnt, dass aus der US-A-3 431 759 bereits eine Biegemaschine mit einem programmgesteuerten Greifer bekannt ist, der ein zu biegendes Werkstück von einem Vorrat oder von einer vorgeschalteten Bearbeitungsmaschine aufnimmt, nacheinander in einem vorgegebenen Biegeprogramm entsprechenden Lagen in die Biegemaschine einsetzt und nach Beendigung aller Biegevorgänge an eine Ablegestelle oder eine nachgeschaltete Bearbeitungsmaschine abgibt. Der Greifer ist somit integraler Bestandteil der Biegemaschine; er ist während der Materialzufuhr, während aller Biegevorgänge und während des Abtransportes des fertig gebogenen Werkstückes belegt, und dementsprechend gering ist die Produktivität der Biegemaschine.

Im Rahmen der Erfindung erfasst hingegen der Greifer erst den fertig gebogenen Bügel, er ist also nur während des Abtransportes des fertig gebogenen Bügels belegt und kann daher während der Biegevorgänge, an welchen er nicht teilnimmt, jeweils in seine Ausgangslage zurückkehren und so zur Erhöhung der Produktivität der Biegemaschine beitragen. Die Produktivitätserhöhung wird erfindungsgemäss aber vor allem dadurch erzielt, dass dem Greifer die Funktion der Sortierung der Bügel nach vorgegebenen Anweisungen, z.B. nach Grösse, Form, Besteller usw. zugeteilt wird, und zwar auf Grund von Befehlen, welche der Datenträger liefert, mit dem auch die jeweils hergestellten Bügel nach Grösse und Form programmiert werden.

Durch die Erfindung wird es somit ermöglicht, das Arbeitsprogramm einer Bügelbiegemaschine nicht nur bezüglich der Herstellung von Bügeln verschiedener Form und/oder Grösse, sondern auch bezüglich des Sortierens bzw. Ablegens der fertigen Bügel an verschiedenen Ablagestellen ausserhalb der lärmenden Maschinenhalle und daher völlig ungestört in einem Büro durch entsprechende Kodierung eines Datenträgers in einem Kodiergerät festzulegen. Der Datenträger, etwa ein Magnetband, wird dann in das Eingabegerät der Biegemaschine eingesetzt und abgetastet, wobei von der automatisch gesteuerten Biegemaschine ein umfangreiches Arbeitsprogramm, etwa ein gesamtes Tagesprogramm, ohne Unterbrechung abgewickelt werden kann und die fertigen Bügel sofort automatisch geordnet abgelegt werden, so dass keine Stillstandszeiten der Maschine erforderlich sind und auch nicht Bedienungspersonen der Maschine dem Stress ausgesetzt werden müssen, die rasch nacheinander anfallenden Bügel unverzüglich fehlerfrei zu sortieren.

Bei einer Bügelbiegemaschine, die mit intermittierendem Drahtvorschub arbeitet und mit einer automatisch betätigbaren Schere zum Abtrennen der fertigen Bügel ausgestattet ist, ist der fertig gebogene Bügel mit dem zum Biegewerkzeug verlaufenden Drahtstrang noch verbunden, so dass sich eine besonders einfache Ausführungsmöglichkeit der Erfindung ergibt, wenn die Bewegungsbahn des Greifers jeweils von einem Punkt ausgeht, der auf der Drahtvorschubstrecke zwischen der Schere und dem Biegewerkzeug der Biegemaschine liegt, und Einrichtungen zur automatischen Rückführung des Greifers in diese Ausgangslage vorgesehen sind.

Da aber zwischen Schere und Biegewerkzeug häufig nur wenig Raum für die Greiferbewegung verfügbar ist und überdies das Erfassen des fertigen Bügels an einem Bügelende bzw. allgemein nur an einem Punkt oft keine ausreichende Sicherheit für ein einwandfreies Festhalten und Ablegen des Bügels bietet, sind nach einer vorteilhaften weiteren Ausführungsform der Erfindung mit dem Greifer gekoppelte Koordinatengeber vorgesehen, welche die jeweilige Istlage des Greifers einem Rechner in der Steuereinrichtung melden, und der Greifer ist durch die Steuereinrichtung jeweils an einen vom Rechner auf Grund der gesteuerten Biegevorgänge bei der Bügelherstellung ermittelten, die Sollage des Greifers angebenden Punkt heranführbar, in dem ein Schenkel des fertig gebogenen Bügels zu liegen kommt. Für die Auswahl dieses Punktes, von dem die Bewegung des Greifers zur Ablagestelle ausgeht, können dem Rechner noch verschiedene Nebenbedingungen aufgegeben werden, etwa die, dass er in der Mitte eines Bügelschenkels liegen soll.

Natürlich kann im Rahmen der Erfindung der Greifer verschiedene Formen haben, etwa die Form von gesteuerten Greiferzangen oder von gesteuerten Elektromagneten.

Die Erfindung wird nun unter Bezugnahme auf die Zeichnungen an Ausführungsbeispielen genauer beschrieben. Es zeigt:

Fig. 1 eine Anlage nach der Erfindung in schematischer Vorderansicht,

Fig. 2 die zugehörige Draufsicht und

Fig. 3 die zugehörige Seitenansicht,

Fig. 4 das Schema einer Steuereinrichtung für eine erfindungsgemässe Anlage,

Fig. 5 einen Greiferkopf mit zwei Greifzangen in Ansicht,

Fig. 6 eine zugehörige Draufsicht, und die

Fig. 7 und 8 schliesslich einen Greiferkopf mit zwei Elektromagneten in Ansicht bzw. Draufsicht.

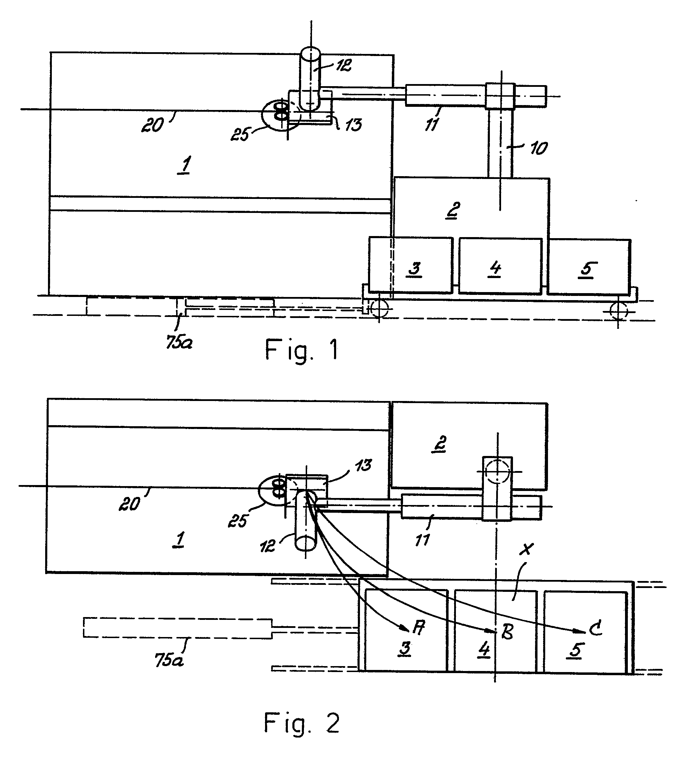

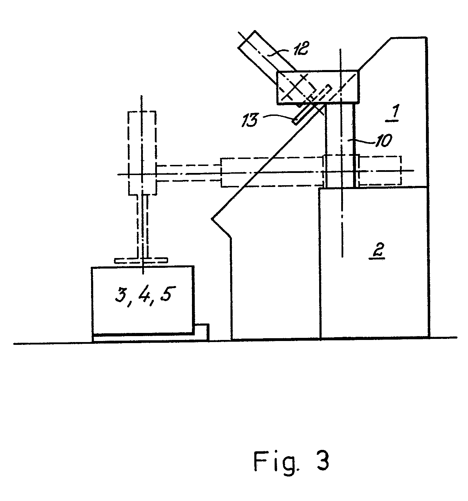

In den Fig. 1 bis 3 erkennt man die nur schematisch gezeichnete Biegemaschine 1, eine Greifeinrichtung 2 für die fertig gebogenen und vom Rohmaterialstrang abgetrennten Bügel sowie an den Abgabestellen A, B und C für Bügel bestimmter Form und/oder Grösse angeordnete Aufnahmebehälter 3 bis 5.

Die Greifereinrichtung 2 besteht im wesentlichen aus einem teleskopartig ausfahrbaren, lotrechten Ständer 10, einem gleichfalls teleskopartig ausfahrbaren Arm 11 und einem an diesem Arm angeordneten Greiferkopf 12, wobei der Ständer 10 und der Arm 11 noch jeweils um ihre Längsachsen drehbar ausgebildet sind.

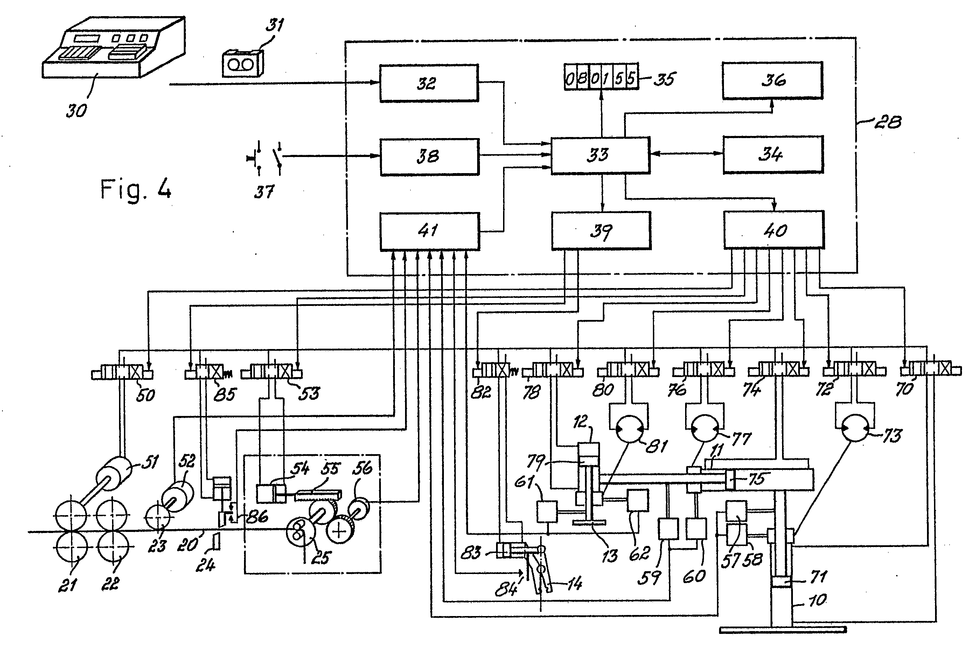

Der Greiferkopf 12 ist mit einer Tragplatte 13 versehen, an welcher beispielsweise eine in den Fig. 4 bis 6 dargestellte Greifzange 14 oder gegebenenfalls auch ein Elektromagnet zum Erfassen eines Bügels angeordnet sein kann. In dem vom Greiferkopf 12 überstreichbaren Bereich können, falls erforderlich, natürlich auch mehr als drei Aufnahmebehälter vorgesehen sein.

Der Aufbau der Biegemaschine ist an sich bekannt und soll hier unter Bezugnahme auf die schematische Darstellung links unten von Fig. 4 nur so weit beschrieben werden, wie dies für das Verständnis der Erfindung notwendig ist.

Ein Materialstrang 20 wird von Vorschubrollenpaaren 21, 22 erfasst und in die Biegemaschine vorgeschoben. Eine Messrolle 23 liegt am Materialstrang an und wird von diesem bei seiner Vorschubbewegung mitgenommen, wodurch, wie im Zusammenhang mit der Steuereinrichtung noch näher beschrieben wird, der jeweils zurückgelegte Weg des Materialstranges ermittelt wird. Schliesslich passiert der Materialstrang noch eine Schere 24, um dann zum eigentlichen Biegewerkzeug 25 zu gelangen. Das nur schematisch dargestellte Biegewerkzeug 25 besteht z.B. in bekannter Weise aus zwei dornartigen Teilen, von denen jeweils einer feststeht und der andere entsprechend dem gewünschten Biegewinkel gegenüber dem feststehenden Teil verschwenkt wird, wobei die beiden Werkzeugteile bei einer Umkehr des Richtungssinnes des Biegevorganges ihre Relativlage zum Materialstrang vertauschen.

Um in der geschilderten Anlage Bügel biegen und sortieren zu können, werden die Abmessungen jedes Bügels, d.h. die Seitenlängen, die Biegewinkel zwischen jeweils zwei benachbarten Seiten des Bügels, sowie die Biegerichtung und vorzugsweise auch der Durchmesser des Drahtmaterials, aus dem die Bügel hergestellt werden sollen und der erfahrungsgemässe Rückfederungswinkel dieses Materials beim Biegevorgang, sowie schliesslich die erforderliche Anzahl der mit gleichen Abmessungen herzustellenden Bügel und die vorgesehene Ablagestelle des fertigen Bügels in einem etwa in einem Büro aufgestellten Kodier- oder Dateneingabegerät 30 (Fig. 4) auf einem Datenträger 31, etwa einem Magnet- oder Lochband, in einem festgelegten Kode gespeichert. Der Datenträger kann dabei die Parameter für eine grosse Anzahl sich hinsichtlich ihrer Abmessungen und Formen unterscheidender Bügel aufnehmen. Schliesslich kann auch jener Punkt am Umfang des jeweils fertig gebogenen Bügels, an dem dieser von der Greifvorrichtung erfasst werden soll, etwa durch Angabe seines Abstandes vom Bügelanfang, am Datenträger kodiert festgelegt werden.

Dieser Datenträger wird, etwa in einer üblichen Kassette, in ein Datenlesegerät 32 der Steuereinrichtung 28 der Biegemaschine eingesetzt. Das Lesegerät 32 übermittelt die Daten nacheinander einem Rechner 33, wobei die Daten gleichzeitig in einem Datenspeicher 34 gesammelt werden.

Die Aufgabe des Datenspeichers 34 ist es, die Parameter der einzelnen Bügel festzuhalten, so dass sie gegebenenfalls beliebig oft reproduzierbar sind, da die Daten jedes Bügels auf dem Datenträger ja nur ein einziges Mal vorhanden sind und daher vom Lesegerät 32 auch nur einmal abgelesen werden können, ohne Rücksicht darauf, wie viele untereinander gleiche Bügel hergestellt werden sollen. Gegebenenfalls ist es zweckmässig, noch ein Anzeigegerät 35 vorzusehen, an welchem angezeigt wird, wie viele gleiche Bügel bis zu einem gegebenen Zeitpunkt bereits hergestellt worden sind. Schliesslich kann noch ein Drucker 36 vorgesehen sein, in dem die Parameter der von der Maschine hergestellten Bügel ausgedruckt und festgehalten werden können, um Unterlagen über die tatsächlich durchgeführte Produktion zu erhalten.

Die Aufgabe des Rechners ist es, die Arbeitsbewegungen der einzelnen Elemente der Biegemaschine zu koordinieren. Zu diesem Zweck muss der Rechner 33 als dauernde Eingabewerte die Istwerte der Lagekoordinaten des Biegewerkzeuges der Biegemaschine sowie des Greifers und die Lagekoordinaten aller Ablagestellen für die Bügel, bezogen auf ein beliebiges, raumfestes Koordinatensystem, eingegeben erhalten.

Aufgrund dieser Istwerte und der vom Lesegerät dem Datenträger entnommenen Parameter der einzelnen Bügel hat der Rechner nun folgende Aufgaben zu lösen: er muss die erforderlichen Längen der einzelnen Vorschubschritte des Materialstranges aufgrund der eingegebenen Seitenlängen des Bügels und der erforderlichen Ausrundungsradien an den Abbiegestellen des Bügels ermitteln. Er hat weiters aufgrund der eingegebenen Werte der zwischen benachbarten Bügelseiten eingeschlossenen Winkel und unter Berücksichtigung der erfahrungsgemässen Rückfederung des Materials die Biegewinkel zu berechnen.

Weiters sind beim dargestellten Ausführungsbeispiel vor dem Schnitt die Lagekoordinaten jenes Punktes, an dem der Bügel erfasst werden soll, bezüglich des gewählten raumfesten Koordinatensystems aufgrund der Längen der einzelnen zurückgelegten Vorschubschritte und der Werte der einzelnen durchlaufenen Biegewinkel zu ermitteln. Diese Koordinaten der Sollage sind mit den Koordinaten der jeweiligen Istlage des Greifers zu vergleichen und daraus ist der vom Greifer zurückzulegende Weg zu berechnen, damit der Greifer zu dem Bügel herangeführt wird und diesen erfassen kann.

Schliesslich ist nach dem Erfassen des Bügels ein Koordinatenvergleich zwischen der nun eingenommenen Lage des Greifers und der Lage der programmgemäss für diesen bestimmten Bügel vorgesehenen Ablagestelle durchführen und der Greifer an diese Ablagestelle heranzuführen.

Um den Rechner nicht ausschliesslich von der Eingabe der Werte mittels des Datenträgers abhängig zu machen, sondern gegebenenfalls bestimmte Bügelformen auch unmittelbar an der Biegemaschine eingeben zu können, bzw. bestimmte Arbeitsvorgänge auch unmittelbar durch die Maschine ausführen lassen zu können, wie etwa das Abtrennen des Materialstranges im Falle einer Störung, das Ein- und Ausfädeln des Materialstranges usw., sind Eingabeschalter 37 vorgesehen, die direkt vom Maschinenpersonal betätigt werden können und deren Steuerbefehle über einen Eingangsumsetzer 38 dem Rechner 33 zugeführt werden. Die vom Rechner 33 ermittelten Sollwerte werden Ausgangsumsetzern 39, 40 zugeleitet. Der Ausgangsumsetzer 39 erzeugt digitale Steuerbefehle, während der Ausgangsumsetzer 40 analoge Steuersignale, z.B. Spannungen, erzeugt.

So wird beispielsweise zur Herstellung eines bestimmten Bügels vom Ausgangsumsetzer 40 zunächst ein elektrohydraulisches Ventil 50 derart beaufschlagt, dass sich ein Hydraulikmotor 51 im Sinne eines Vorschubes des Materialstranges 20 mittels der Vorschubrollenpaare 21, 22 in Bewegung setzt.

Der Materialstrang 20 nimmt die Messrolle 23 mit, durch welche ein Impulsgeber 52 angetrieben wird, dessen Impulse über einen Eingangsumsetzer 41 dem Rechner 33 zugeführt werden. Durch diesen Impulsgeber wird die jeweilige Istlage des Materialstranges festgelegt und kann mit der Solllage im Rechner verglichen werden. Wenn sich die beiden Lagewerte einander nähern, wird das Analogsignal vom Ausgangsumsetzer 40 allmählich reduziert und dadurch das elektrohydraulische Ventil 50 allmählich geschlossen, bis der Materialstrang 20 zum Stillstand kommt. Sobald der Materialstrang 20 in seiner Solllage stillsteht, wird vom Ausgangsumsetzer 40 ein elektrohydraulisches Ventil 53 beaufschlagt, wodurch beispielsweise ein Kolben in einem Zylinder 54 in Fig. 4 von links nach rechts geschoben und über eine Zahnstangen-Zahnritzelkombination 55 das Biegewerkzeug 25 in Tätigkeit gesetzt wird. Über ein mit dem Zahnritzel kämmendes Zahnrad kann ein weiterer Impulsgeber 56, der als Istwertgeber für den Biegewinkel wirkt, angetrieben werden. Seine Werte werden ebenfalls über den Eingangsumsetzer 41 dem Rechner 33 zugeleitet.

Sobald der gewünschte Biegewinkel erreicht ist, wird das elektrohydraulische Ventil 53 umgeschaltet und der Kolben im Zylinder 54 in entgegengesetztem Sinne beaufschlagt, so dass das Biegewerkzeug wieder in seine Ausgangslage zurückgeführt wird und dort zum Stillstand kommt.

Dieser Vorgang wird sooft wiederholt, bis der gewünschte Bügel fertiggestellt ist.

Der Rechner 33 hat während dieses Herstellungsvorganges aufgrund der Bewegung des Materialstranges die Länge eines bestimmten, zum Erfassen des Bügels vorgesehenen Punktes am Bügelumfang im gewählten, raumfesten Koordinatensystem errechnet.

Die Höhenlage des Ständers 10 der Greifeinrichtung 2 wird über einen Istwertgeber 57 kontrolliert. Ebenso wird der Schwenkwinkel des Armes 11 um die Ständerachse bezüglich einer festgelegten Ruhelage durch einen Istwertgeber 58 festgehalten. In gleicher Weise wird die Axialverschiebung des Armes 11 durch einen Istwertgeber 59 und der Schwenkwinkel des Greiferkopfes 12 um diesen Arm bezüglich einer festgelegten Ruhelage durch einen Istwertgeber 60 kontrolliert. Schliesslich ist noch ein Istwertgeber 61 für die Axiallage der Platte 13 und ein Istwertgeber 62 für die Winkellage dieser Platte bei Rotation der Platte 13 um die Achse des Greiferkopfes 12 vorgesehen.

Aus den Angaben dieser Istwertgeber, welche wieder über den Eingangsumsetzer 41 dem Rechner 33 zugeleitet werden, kann der Rechner die koordinatenmässige Lage der Tragplatte 13 in jedem beliebigen Zeitpunkt ermitteln.

Die axiale Lage des Ständers 10 kann über ein elektrohydraulisches Ventil 70 und den Kolben eines Arbeitszylinders 71 verändert werden, die Winkellage des Armes 11 über ein elektrohydraulisches Ventil 72 und einen hydraulischen Motor 73; analog kann die axiale Lage des Armes 11 über ein elektrohydraulisches Ventil 74 und den Kolben eines Arbeitszylinders 75 verändert werden. Die Winkellage des Greiferkopfes 12 ist mittels eines hydraulischen Ventils 76 und eines Hydraulikmotors 77 veränderbar. Schliesslich kann die axiale Lage der Tragplatte 13 über ein elektrohydraulisches Ventil 78 und den Kolben eines Zylinders 79 und deren Winkellage über ein elektrohydraulisches Ventil 80 und einen hydraulischen Motor 81 verändert werden.

Sobald der Rechner 33 die Lagekorrekturen der Tragplatte 13 bezüglich des gewählten Angriffspunktes am Bügel ermittelt hat, die erforderlich sind, um den Bügel mit der Greifzange 14 erfassen zu können, werden über den Ausgangsumsetzer 40 die Organe 70 bis 81 im Sinne eines Hinführens der Tragplatte 13 an den ausgewählten Angriffspunkt für die Greifzange 14 betätigt.

Sobald Lagenkoinzidenz erreicht ist und die Tragplatte 13 soweit abgesenkt wurde, dass die an ihr befestigte Greifzange 14 so positioniert ist, dass eine Bügelseite zwischen den Zangenbacken liegt, wird vom Ausgangsumsetzer 39 ein elektrohydraulisches Ventil 82 betätigt, wodurch der Kolben eines Arbeitszylinders 83 im Sinne einer Schliessbewegung der Zange beaufschlagt wird. Das vollzogene Schliessen der Zange 14 wird über einen Endlagenmelder 84 an den Eingangsumsetzer 41 und von diesem an den Rechner 33 gemeldet, der nun über den Ausgangsumsetzer 39 und ein elektrohydraulisches Ventil 85 eine Schnittbewegung der hydraulischen Schere 24 einleitet. Der Schere ist ein Endlagenmelder 86 zugeordnet, dessen Rückmeldung an den Rechner 33 nach vollzogenem Schnitt das Öffnen der Schere bewirkt.

Der nun vom Materialstrang 20 getrennte Bügel ruht jetzt in der Greifzange 14.

Der Rechner 33, dem die augenblicklichen Lagekoordinaten der Greifzange 14 ebenso bekannt sind wie die Lagekoordinaten der für den jeweils fertiggestellten Bügel vorgesehenen Ablagestelle, kann nun vermittels des Ausgangsumsetzers 40 die Organe 70 bis 81 neuerlich in Tätigkeit setzen und damit die den Bügel tragende Greifzange 14 an die vorbestimmte Ablagestelle heranführen. Sobald der Bügel an dieser Ablagestelle angelangt ist, wird über den Ausgangsumsetzer 39 das elektrohydraulische Ventil 82 wieder in seine Ausgangsstellung zurückgestellt und damit die Zange 14 geöffnet. Damit ist der zur Herstellung und Ablage eines Bügels erforderliche Arbeitszyklus beendet.

Dem Rechner ist die Anzahl der jeweils an einer Ablagestelle abgelegten Bügel ebenso bekannt wie der Durchmesser des Drahtes, aus welchem diese gefertigt wurden. Damit kann auch die in jedem Zeitpunkt an der betreffenden Ablagestelle erreichte Stapelhöhe berechnet und der Greifer der Höhe nach derart gesteuert werden, dass der nachfolgende Bügel genau auf dem vorhergehenden zu liegen kommt, beim Stapelvorgang also nicht fallengelassen werden muss.

Wenn, wie im dargestellten Ausführungsbeispiel, eine Biegemaschine verwendet wird, bei welcher die fertigen Bügel von einem Materialstrang 20 abgetrennt werden müssen, dessen Vorschubweg zwischen einer Schere 24 und dem Biegewerkzeug 25 festliegt, kann die Greifereinrichtung 2 vereinfacht werden, indem der Greifer 14 jeweils zum gleichen, zwischen Schere 24 und Biegewerkzeug 25 liegenden Punkt des Materialstranges hingeführt und der Draht dort vor der Betätigung der Schere 24 erfasst wird, so dass eine Steuerung der Greiferbewegung nur zu der jeweils ausgewählten Ablagestelle hin erforderlich ist, wogegen die Rückkehrbewegung in die Ausgangslage automatisch erzwungen werden kann.

Eine andere, in den Fig. 1 und 2 mit unterbrochenen Linien angedeutete Vereinfachung der Anlage ergibt sich, wenn der fertige Bügel mittels des Greiferkopfes 12 nur immer zu einer bevorzugten, in Fig. 2 z.B. mit X bezeichneten Freigabestelle transportiert wird, wo die Greifzange 14 öffnet, so dass der Bügel freigegeben wird, während die als Behälter 3 bis 5 ausgebildeten Ablagestellen verfahrbar ausgebildet sind und unter der Steuerwirkung der Steuereinrichtung 28, z.B. durch entsprechende Betätigung eines Steuerzylinders 75a, so verschoben werden, dass sich jeweils ein bestimmter, durch die Kodierung des Datenträgers bezeichneter Behälter bei der Freigabe des Bügels durch den Greiferkopf 12 unter diesem befindet. Der Schwenkarm 11 des Greiferkopfes 12 kann dann konstante Länge haben.

Vorzugsweise sollen an der Tragplatte 13 zwei Greifzangen oder Elektromagnete vorgesehen werden, die so angeordnet sind, dass sie gleichzeitig zwei im Winkel zueinander stehende Bügelseiten erfassen, so dass der Bügel beim Stapelvorgang auch in seiner Ebene sicher geführt wird.

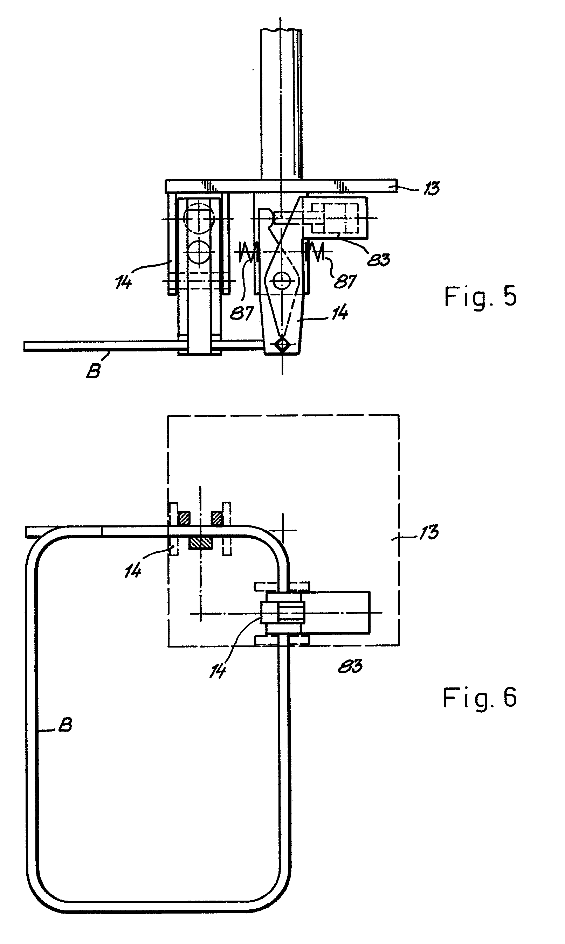

In den Fig. 5 und 6 sind zwei in rechtem Winkel zueinander angeordnete Greifzangen 14, an der Tragplatte 13 angebracht, dargestellt. Die Zangen können beispielsweise unter der Wirkung von nur angedeuteten Federn 87 geöffnet und durch den Kolben eines Arbeitszylinders 83 gegen die Wirkung dieser Federn geschlossen werden. Wie aus Fig. 6 ersichtlich ist, erfassen die beiden zusammenwirkenden Zangen einen Bügel B an je einer von zwei miteinander einen Winkel einschliessenden Seiten, so dass der Bügel stets unverrückbar parallel zur Tragplatte 13 gehalten wird.

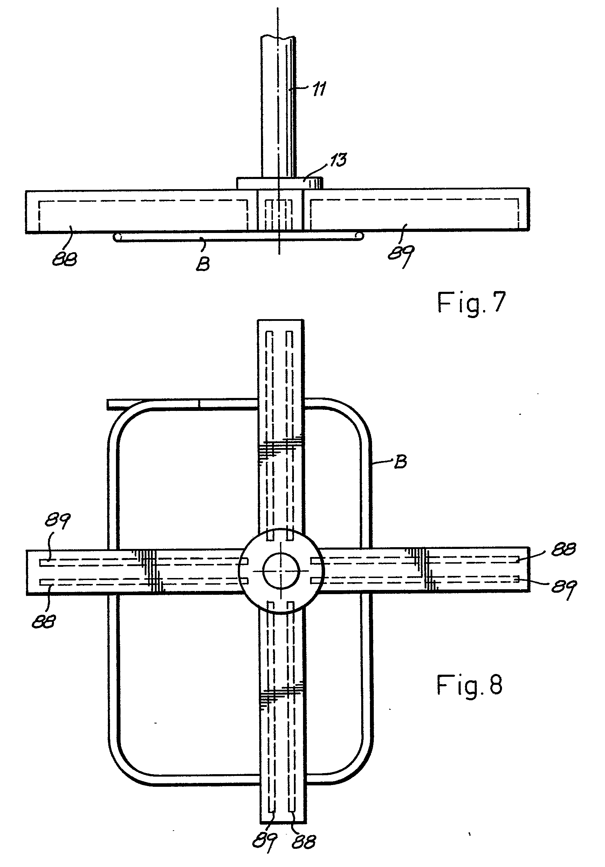

Die Fig. 7 und 8 schliesslich zeigen Magnetgreifer. Der Greifer weist vier in rechtem Winkel zueinander angeordnete Schienen auf, die je einen leistenförmig ausgebildeten Magnetnordpol 88 und einen gleichfalls leistenförmigen Magnetsüdpol 89 bilden. Wird dieser Greifer mit dem Schnittpunkt seiner Tragschienen in einen Bereich in der Nähe des Bügelschwerpunktes gebracht, so erfasst er, wie in Fig. 8 dargestellt, den Bügel.

Die dargestellten Ausführungsbeispiele der Erfindung lassen noch verschiedene Abwandlungen und Ergänzungen zu. So kann beispielsweise durch die Steuereinrichtung auf Grund eines ihr seitens des Datenträgers aufgegebenen Befehls am Ende eines Erzeugungsprogramms ein Signal auslösbar sein, und ferner können auf Grund eines diesbezüglichen Befehls mittels der Steuereinrichtung die zu einem vorgegebenen Erzeugungsprogramm gehörigen Bügel, z.B. durch selektiv betätigbare Farbsprüheinrichtungen, unterschiedlich markierbar sein.

**Patentansprüche**

1. Anlage zum Herstellen von Bügeln unterschiedlicher Gestalt und Grösse, insbesondere von Betonbewehrungsbügeln, mit Hilfe einer Biegemaschine (1), an welcher die Längen der Schenkel und die Biegewinkel zwischen benachbarten Schenkeln der herzustellenden Bügel, sowie die erforderliche Stückzahl derselben unter Mitwirkung einer elektronischen Steuereinrichtung (28) einstellbar sind, wobei die gewünschten Einstellungen der Biegemaschine über einen Datenträger (31) erfolgen, der mit der elektronischen Steuereinrichtung (28) so zusammenwirkt, dass Bügel unterschiedlicher Gestalt und/oder Grösse programmierbar sind, dadurch gekennzeichnet, dass die fertigen Bügel mittels eines Greifers (14) entweder wahlweise zu einer von mehreren örtlich getrennten Abgabestellen (A, B, C), an denen sich getrennte Aufnahmebehälter (3, 4, 5) befinden, oder aber zu einer für alle Bügel gemeinsamen Freigabestellung (X), unter welche wahlweise einer von mehreren getrennten Aufnahmebehältern (3, 4, 5) bewegbar ist, transportierbar sind, wobei die Auswahl der jeweiligen Abgabestelle (A, B oder C) bzw. des jeweils unter die gemeinsame Freigabestelle (X) bewegten Behälters (3, 4 oder 5) durch seitens des Datenträgers (31) der elektronischen Steuereinrichtung (28) aufgegebenen Befehl erfolgt.

2. Anlage nach Anspruch 1, mit einer Biegemaschine (1), die mit intermittierendem Drahtvorschub arbeitet und mit einer automatisch betätigbaren Schere (24) zum Abtrennen der fertigen Bügel ausgestattet ist, dadurch gekennzeichnet, dass die Bewegungsbahn des Greifers (14) jeweils von einem Punkt ausgeht, der auf der Drahtvorschubstrecke zwischen der Schere (24) und dem Biegewerkzeug (25) der Biegemaschine liegt, wobei Einrichtungen zur automatischen Rückführung des Greifers (14) in diese Ausgangslage vorgesehen sind.

3. Anlage nach Anspruch 1, dadurch gekennzeichnet, dass mit dem Greifer (14) gekoppelte Koordinatengeber (57 bis 62) vorgesehen sind, welche die jeweilige Istlage des Greifers (14) einem Rechner (33) in der Steuereinrichtung (28) melden, und dass der Greifer durch die Steuereinrichtung jeweils an einem vom Rechner aufgrund der gesteuerten Biegevorgänge bei der Bügelherstellung ermittelten, die Sollage des Greifers angebenden Punkt heranführbar ist, in dem ein Schenkel des fertig gebogenen Bügels zu liegen kommt.

4. Anlage nach einem der Ansprüche 1 bis 3, dadurch gekennzeichnet, dass der Greifer (14) zwei unter einem Winkel zueinander angeordnete hydraulisch gesteuerte Greifzangen aufweist.

5. Anlage nach einem der Ansprüche 1 bis 3, dadurch gekennzeichnet, dass der Greifer zwei oder mehr gesteuerte Elektromagnete aufweist, deren Pole (88, 89) eine Ebene definieren.

6. Anlage nach einem der Ansprüche 1 bis 5, dadurch gekennzeichnet, dass durch die Steuereinrichtung (28) aufgrund eines ihr seitens des Datenträgers (31) aufgegebenen Befehls am Ende eines vorgegebenen Erzeugungsprogrammes ein Signal auslösbar ist.

7. Anlage nach einem der Ansprüche 1 bis 6, dadurch gekennzeichnet, dass durch die Steuereinrichtung (28) aufgrund eines ihr seitens des Datenträgers (31) aufgegebenen Befehls die zu einem vorgegebenen Erzeugungsprogramm gehörigen Bügel, z.B. durch selektiv betätigbare Farbsprüheinrichtungen, unterschiedlich markierbar sind.

**Claims**

1. Installation for manufacturing stirrups of different shapes and sizes, particularly of concretereinforcement stirrups, by means of a bending machine (1), on which the lengths of the sides and the angles of bend between adjacent sides of the stirrups to be manufactured as well as the required number thereof can be set by means of an electronic control device (28), the desired settings of the bending machine being made via a data carrier (31), which cooperates with the electronic control device (28) in such a manner that stirrups of different shapes and/or sizes can be programmed, characterized in that the finished stirrups are adapted to be conveyed by means of a gripper (14) either selectively to one of a plurality of locally separated dumping points (A, B, C), where separat bins (3, 4, 5) are provided, or to a common release position (X) for all stirrups, below which selectively one of a plurality of separate bins (3, 4, 5) can be moved, the selection of the dumping point (A, B or C) or of the container (3, 4 or 5) to be moved at any time below the common release position (X), respectively, being controllable by commands delivered from said data carrier (31) to said electronic control device (28).

2. Installation according to claim 2, comprising a bending machine (1) operating with an intermittent wire feed and with an automatically actuable shear (24) for severance of the finished stirrups, characterized in that the path of motion of said gripper (14) at any time starts from a point which lies on the wire feed span between said shear (24) and the bending tool (25) of said bending machine, means being provided for the automatic return of said gripper (14) into this starting position.

3. Installation according to claim 1, characterized in that coordinate-transmitters (57 to 62) are provided which are coupled to said gripper (14) and which report the actual position of said gripper (14) at any time to a computer (33) in said control device (28), and in that said gripper can be advanced by said control device at any time to a point which is determined by said computer on the basis of the controlled bending processes in the stirrup manufacture and corresponds to the desired position of said gripper, where one side of the finished stirrup comes to rest.

4. Installation according to claim 1, characterized in that said gripper (14) includes two hydraulically controlled gripper tongs arranged at an angle to one another.

5. Installation according to one of the claims 1 to 3, characterized in that said gripper includes two or more controlled electromagnets, the poles (88, 89) of which define a plane.

6. Installation according to one of the claims 1 to 5, characterized in that said control device (28) is adapted to emit a signal at the end of a predetermined programme of manufacture set by said data carrier (31).

7. Installation according to one of the claims 1 to 6, characterized in that said control device (28) is adapted to mark the stirrups belonging to a predetermined programme of manufacture differently, e.g. by means of selectively actuable colour spraying devices, on the basis of a command set by said data carrier (31).

**Revendications**

1. Installation pour la fabrication de brides de formes et de grandeurs différentes, spécialement des brides d'armature de béton, à l'aide d'une machine de pliage (1) permettant de régler en coopération avec un dispositif de commande électronique (28) les longueurs des branches et l'angle de pliage entre branches voisines des étriers à réaliser ainsi que le nombre de pièces nécessaires, les réglages désirés pour la machine de pliage étant réalisés par l'intermédiaire d'un support de données (31) coopérant avec le dispositif de commande électronique (28) de manière que l'on puisse programmer des étriers de formes et de grandeurs différentes, caractérisée en ce que les étriers terminés sont transportés au moyen d'un dispositif de prise (14) soit vers l'un de plusieurs emplacements de déchargement (A, B, C) séparés dans l'espace sous lesquels sont prévus des conteneurs séparés (3, 4, 5), soit vers un emplacement de déchargement commun (X) à tous les étriers sous lequel peut être amené au choix l'un de plusieurs conteneurs de réception séparés, le choix de l'emplacement de déchargement (A, B ou C) ou respectivement du conteneur (3, 4 ou 5) amené au-dessous de l'emplacement de déchargement commun (X) étant réalisé par des commandes fournies par le support de données (31) du dispositif de commande électronique (28).

2. Installation selon la revendication 1, comprenant une machine de pliage (1) qui fonctionne par avance intermittente d'un fil et qui est équipée d'une cisaille à commande automatique (24) destinée au sectionnement des étriers terminés, caractérisée en ce que la piste suivie par le dispositif de prise (14) part d'un point situé sur le parcours d'avance du fil entre la cisaille (24) et l'outil de pliage (25) de la machine de pliage, des dispositifs étant prévus en vue du retour automatique du dispositif de prise (14) dans cette position de départ.

3. Installation selon la revendication 1, caractérisée en ce que sont prévus des détecteurs de coordonnées (57 à 62) couplés au dispositif de prise (14), qui fournissent la position réelle du dispositif de prise (14) à un calculateur (33) contenu dans le dispositif de commande (28), et en ce que le dispositif de prise est amené par le dispositif de commande en un point constituant la position de consigne du dispositif de prise et déterminé par le calculateur sur la base des opérations de pliage commandées pendant la fabrication de l'étrier, point auquel une branche de l'étrier et terminé vient se disposer.

4. Installation selon l'une quelconque des revendications 1 à 3, caractérisée en ce que le dispositif de prise (14) comprend deux mâchoires commandées hydrauliquement et disposées de manière à former un angle l'une par rapport à l'autre.

5. Installation selon l'une quelconque des revendications 1 à 3, caractérisée en ce que le dispositif de prise comprend deux ou plusieurs électro-aimants commandés dont les pôles (88, 89) définissent un plan.

6. Installation selon l'une quelconque des revendications 1 à 5, caractérisée en ce qu'un signal est déclenché par le dispositif de commande (28) sur la base d'un ordre émis par le support de données (31) à la fin d'un programme de fabrication prédéterminé.

7. Installation selon l'une quelconque des revendications 1 à 6, caractérisée en ce que les étriers appartenant à un programme de fabrication prédéterminé sont marqués de façons diverses, par exemple par des dispositifs de pulvérisation de couleurs actionnés sélectivement, sur la base d'un ordre émis par le support de données (31).

Fig. 1

Fig. 2

Fig. 3

Fig. 4

Fig. 5

Fig. 6

Fig. 7

Fig. 8